# EUROPEAN PATENT SPECIFICATION

(11) **EP 0 567 192 B1**
(45) Date of publication and mention of the grant of the patent: **14.08.1996**
(21) Application number: 93201129.9
(22) Date of filing: 20.04.1993
(51) Int. Cl.: A01D 41/14, A01D 61/00

(54) **Adjustment of the position of an eccentric for controlling auger fingers**
Verstellung der Position eines Excenters zur Steuerung Einzugsschneckenfinger
Réglage de la position d'un excentrique de commande des doigts de vis sans fin d'amenée

(30) Priority: 24.04.1992 GB 9208977
(43) Date of publication of application: 27.10.1993
(73) Proprietor: NEW HOLLAND BELGIUM N.V., B-8210 Zedelgem (BE)
(72) Inventor: Boucquez, Wilfried J., B-8200 Brugge 2 (BE); Colgrove, David J., Burnham-on-Crouch, Essex CM0 8QQ (GB); Bich, Gary L., New Holland, PA 17557 (US); Hall, Larry D., New Holland, PA 17557 (US)
(74) Representative: Vandenbroucke, Alberic

(56) References cited:
- EP-A- 0 236 106
- DD-A- 246 470
- DD-A- 3 336 603
- US-A- 2 701 634

## Description

The present invention relates generally to crop gathering attachments or headers for agricultural harvesting machines and more specifically, although not exclusively, to crop pick-up devices for forage harvesters comprising crop consolidating auger conveyors provided with retractable crop transporting fingers.

In the following description, terms such as "forward", "rearward", "left", "right", etc... are used, which are words of convenience and which are not to be construed as limiting terms.

A crop consolidating auger for a pick-up attachment conventionally extends the full width of the attachment and is provided with oppositely wound auger flights for gathering and consolidating the crop material in the central region of the auger from where the crop is propelled towards further crop transporting and/or processing means including e.g. feed rolls or a comminuting rotor when the front attachment is coupled to a forage harvester. Retractable fingers, embodied in the auger conveyor at least in said central region thereof, commonly are employed to assist in the transfer of crop material from the pick-up device to the crop processing machine to which said device is attached.

Normally, such retractable fingers are carried on bearings which rotate on the eccentric part of a crank shaft mechanism which is provided coaxially with the rotational axis of the auger conveyor; the timing of the arrangement being such that, during operation, the fingers are protruding from the auger body to their maximum possible extent when oriented to the crop collecting side (i.e. the front side) of the pick-up device whereas the fingers are fully retracted when directed to the crop releasing side thereof. In so doing, crop material lifted from the ground and presented to the consolidating auger, at least in the central portion thereof, aggressively is engaged by the protruding fingers and positively is entrained underneath the auger to be released by the retracting fingers at the rearward transitional area between the attachment and its carrier where other crop transporting and processing means are operable to take over the crop material.

The retractable finger construction so far described is conventional in the art and may be seen from a.o. US-A-2.701.634, the content of which is included herein by means of reference.

It has been experienced however that the just described finger timing position relative to the auger body is not always the best suited for all types of crops and crop conditions. Depending on e.g. the crop length, the moisture content or the degree of ripeness, different timing positions of the retractable fingers may be desirable in order to obtain a non-obstructed and fluent transfer of crop material across the auger device. In the arrangement according to the above identified US-A-2.701.634, means are provided to turn the crank shaft around the pivot axis of the auger whereby a different timing position of the retractable fingers can be preset. However, the proposed embodiment offers only a limited range of positions and moreover suffers from the disadvantage that any adjustment of the finger orientation has to be performed during a standstill of the harvester with the attachment being totally inactive, meaning that the result of an adjusted finger setting is not immediately visible. Also, as crop conditions in a same field may vary widely, repeated adjustments of the finger orientation may be required leading to downtime of the harvester.

It is therefore the objective of the present invention to overcome the above mentioned drawbacks of the described prior art arrangement by providing a simple and effective device which allows on-the-go adjustment of the retractable finger orientation over a wide range of positions.

According to the present invention, a crop gathering attachment for an agricultural harvester is provided comprising :
- a rotatable drum-like conveyor for transporting crop material,
- a stationary crank shaft mechanism enclosed in the conveyor and having eccentric means disposed eccentrically to and parallel with the rotational axis of the conveyor; and
- a finger arrangement comprising a plurality of finger members operatively connected to said eccentric means and projecting outwardly through apertures in the peripheral wall of the conveyor to a different extent; the arrangement being timed such that due to the eccentrical disposition of the eccentric means relative to the rotational axis of the conveyor, the finger members are reciprocated relative to said conveyor wall upon rotation of the conveyor, thereby protruding from said wall at one side of the conveyor for projecting into the crop material and being retracted relative to said wall at the generally diametrically opposed side of said conveyor for releasing the transported crop.

The attachment is characterized in that
actuator means are operatively connected to the crank shaft mechanism for remotely controlling the position of the eccentric means relative to the conveyor enabling on-the-go adjustments of the timing of the finger members.

The actuator means preferably are of the electrical type and, when actuated, are operable to vary the relative position of the eccentric means with respect to the conveyor through a range of positions for shifting the maximum extended position of the finger members along the periphery of the conveyor.

Related to another aspect of the present invention, it occasionally is experienced that the crop gathering attachment or even the harvester itself becomes plugged e.g. due to a lump of crop material wedging between crop handling parts thereby preventing the normal operation thereof even to the extent of arresting these parts. To obviate the need of manually unplugging the machine, nowadays harvesters commonly are provided with a drive reversing mechanism which allows for reversing the normal sense of rotation of the crop processing means in order to evacuate the obstructing crop towards the front of the harvester i.e. in a direction opposite to the crop flow during normal operation. However, in the transitional area between the harvester base unit and its front attachment, no means are provided to positively assist in the evacuation of the crop since, in said area at the rearward side of the consolidating auger, the auger fingers are completely retracted in the auger body, which is the normal position for the fingers during forward drive of the auger for releasing the transported crop appropriately. As a result, manual interference of the operator for unplugging the harvester sometimes still is needed especially if the cause of the plugging is located in said transitional area.

It is therefore another objective of the present invention to obviate the need of manual interference of the harvester operator during unplugging of the harvester by providing means and a method which allow for the positive assistance in the unplugging operation of the auger fingers at the rearward side of the auger when reversing the drive direction thereof.

According to this second aspect of the present invention, a crop gathering attachment for an agricultural harvester is provided comprising :
- a rotatable drum-like conveyor operatively connected to a drive mechanism for driving the conveyor either in a first direction to transport crop material towards said harvester or in a second, reverse direction to expel plugged crop material from said harvester,
- a stationary crank shaft mechanism enclosed in the conveyor and having eccentric means disposed in a first position eccentrically to and parallel with the rotational axis of the conveyor; and
- a finger arrangement comprising a plurality of finger members operatively connected to said eccentric means and projecting outwardly through apertures in the peripheral wall of the conveyor to a different extent; the arrangement being timed such that due to the eccentrical disposition of the eccentric means relative to the rotational axis of the conveyor, the finger members are reciprocated relative to said conveyor wall upon rotation of the conveyor, thereby protruding from said wall at one side of the conveyor for projecting into the crop material and being retracted relative to said wall at the generally diametrically opposed side of said conveyor for releasing the transported crop.

The attachment is characterized in that
actuator means are operatively connected to the crank shaft mechanism in a manner such that, upon reversing the drive of the drive mechanism from the first direction to the second direction and/or vice versa, the eccentric means is moved to a second position offset relative to the first position, and/or vice versa, to thereby substantially modify the timing of the finger members.

Still according to the second aspect of the present invention, a method of unplugging crop material from a crop gathering attachment for an agricultural harvester is provided; said attachment comprising :
- a rotatable drum-like conveyor operatively connected to a drive mechanism for driving the conveyor either in a first direction to transport crop material towards said harvester or in a second, reverse direction to expel plugged crop material from said harvester,
- a stationary crank shaft mechanism enclosed in the conveyor and having eccentric means disposed in a first position eccentrically to and parallel with the rotational axis of the conveyor; and
- a finger arrangement comprising a plurality of finger members operatively connected to said eccentric means and projecting outwardly through apertures in the peripheral wall of the conveyor to a different extent; the arrangement being timed such that due to the eccentrical disposition of the eccentric means relative to the rotational axis of the conveyor, the finger members are reciprocated relative to said conveyor wall upon rotation of the conveyor, thereby protruding from said wall at one side of the conveyor for projecting into the crop material and being retracted relative to said wall at the generally diametrically opposed side of said conveyor for releasing the transported crop.
The method is characterized in that it comprises the steps of :
- reversing the drive of the drive mechanism from the first direction to the second direction;
- actuating actuator means, operatively connected to the crank shaft mechanism; and thereby
- moving the eccentric means to a second position offset relative to the first position to thereby substantially modify the timing of the finger members.

A crop gathering attachment in accordance with the different aspects of the present invention will now be described in greater detail, by way of example, with reference to the accompanying drawings, in which :
Figure 1 is a perspective view of a crop pick-up attachment for a forage harvester, comprising a consolidating auger with retractable fingers;
Figure 2 is a curtailed perspective view of a crop consolidating auger with parts of the exterior surface removed for showing the interior crank shaft mechanism which controls the position of the retractable fingers;
Figure 3 is a schematic side view of the pick-up attachment as seen from the right of Figure 1 in relation to the feed rolls of a forage harvester; the arrangement being shown in the forward operative drive condition;
Figure 4 is a view similar to Figure 3 but showing the arrangement in the reverse drive condition; and
Figure 5 shows an electrical wiring diagram for controlling the adjustment of the retractable auger fingers.

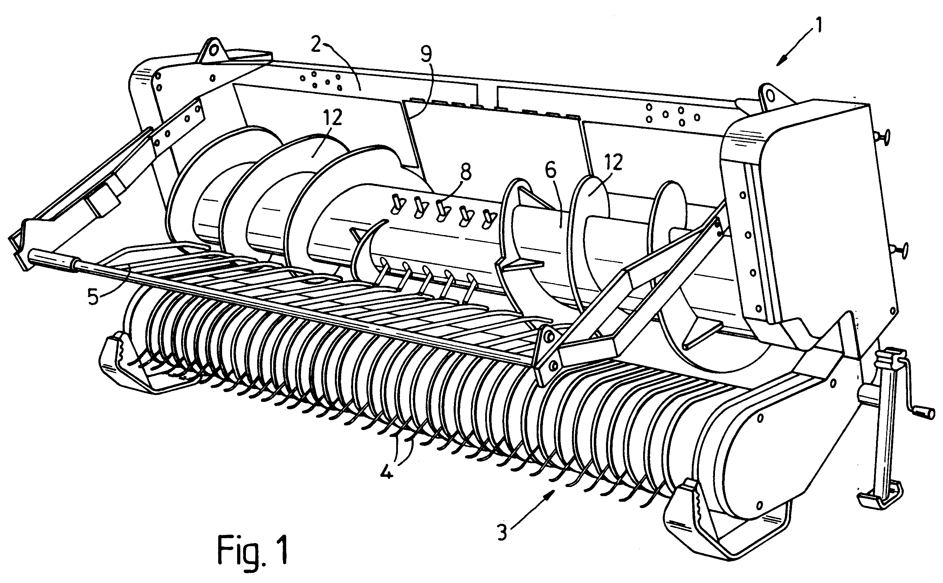

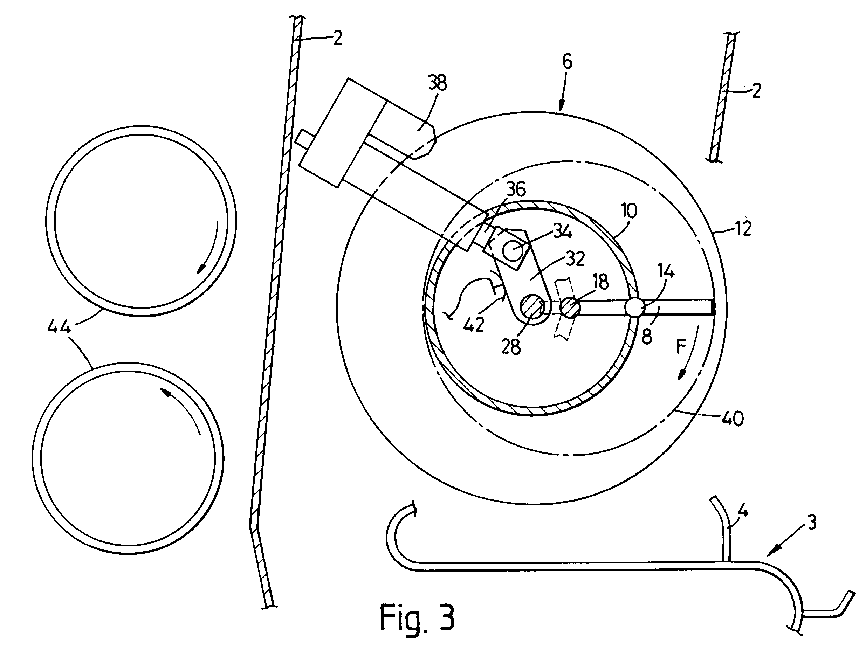

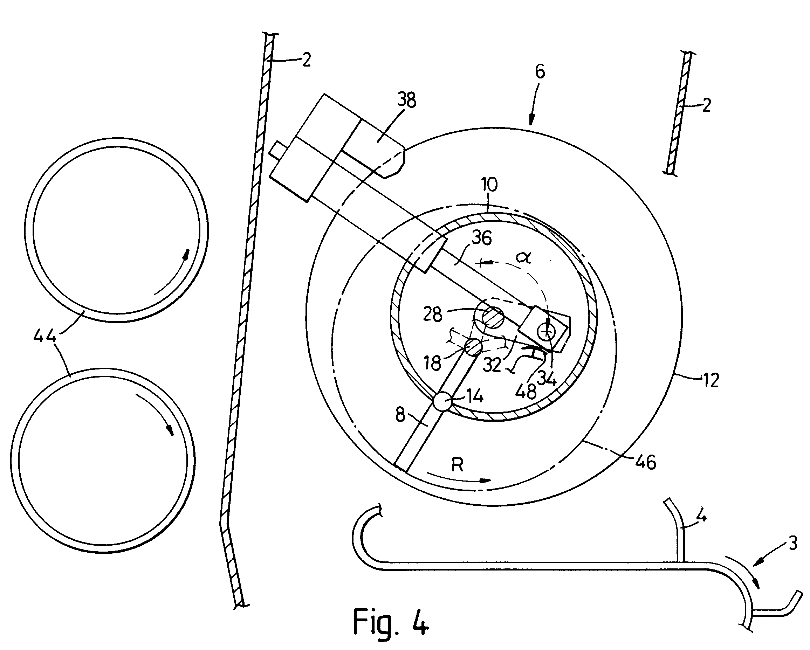

Referring now to Figure 1, a crop gathering attachment 1 for a forage harvester is shown comprising a frame 2, a conventional pick-up device 3 with rotatable tines 4 for lifting the crop from the ground, a so called "wind guard" 5 for restricting upward movement of the crop and a crop consolidating auger 6 having retractable fingers 8; the auger 6 being operable to convey the crop through a central opening 9 in the rear side of the frame 2 towards further processing means, such as feed rolls 44 (shown in Figures 3 and 4) of a forage harvester (not shown).

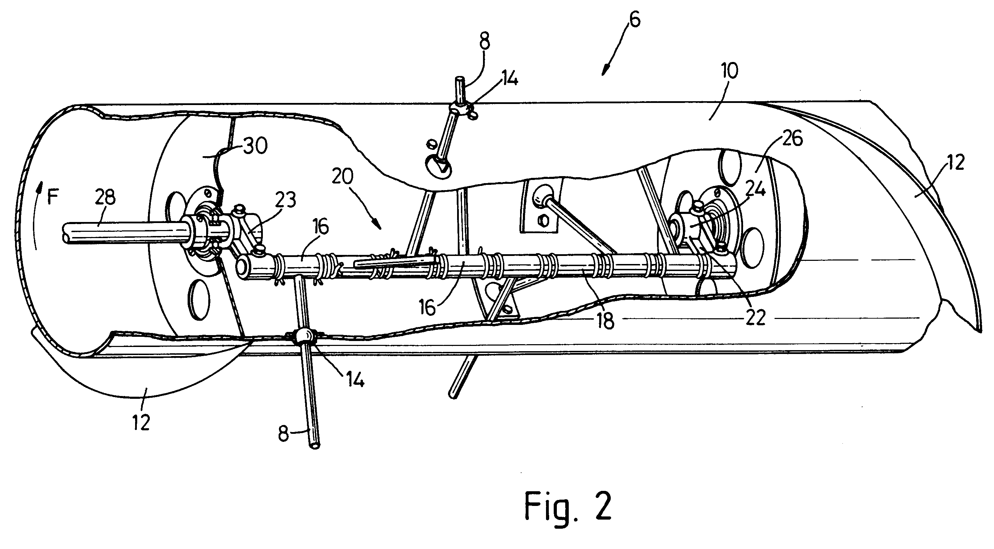

Turning now to Figures 1 and 2, the auger 6 includes a tubular body portion 10 which carries oppositely wound, auger-like conveyor flights 12 at each end which consolidate the gathered crop at a central region of the auger 6 upon rotation thereof. The retractable fingers 8 are disposed at said central portion of the auger 6 and are operable to project into the gathered crop and propel it rearwardly towards the succeeding processing means of the harvester.

The fingers 8 are rod-shaped members slidably fitted through guide members 14 in the auger body 10 and are rotatably journaled by cylindrical bearings 16 to a finger shaft 18, forming part of a stationary crank shaft mechanism, generally indicated at 20. The fingers 8 may be provided in equiangularly spaced rows (as seen in Figure 1) or may be staggered uniformly about the periphery of the auger body 10 (as seen in Figure 2). The finger shaft 18 is eccentrically disposed in the auger body 10 on a pair of crank arms 22 and 23. The crank arm 22 is secured to a stub shaft 24 which is anchored by a bearing in a wall plate 26 mounted solidly within the auger tube 10. The other crank arm 23 is secured to an elongated shaft 28 which passes through a bearing in a second wall plate 30, equally solidly provided in the auger body 10. The shaft 28 extends to the right hand side of the attachment 1, as seen in the direction of forward travel, where it is anchored against rotation to the frame 2. As the stub shaft 24 and the shaft 28 are in line with each other and moreover are disposed coaxially relative to the rotational axis of the auger 6, the crank shaft mechanism 20 remains fixed with relation to the attachment frame 2 when the auger 6 is rotated.

Accordingly, as the auger 6 rotates in the direction of the arrow F, the fingers 8 are rotated about the finger shaft 18 and are reciprocated in the guide members 14 due to the eccentricity of the finger shaft 18 with respect to the auger body 10. The arrangement is timed so that, upon rotation of the auger 6, the fingers 8 extend and project forwardly into the crop material delivered by the pick-up device 3, sweeping the crop under the auger 6, and then retract within the body of the auger 6 in order to assist in releasing the crop material for facilitating the takeover thereof by the feed rolls 44.

As the arrangement of the parts and the mode of operation so far described is conventional in the art, it furthermore will be appreciated that the right hand side of the auger 6 is rotatably supported on the shaft 28 whereas the left hand side thereof is provided with a stub shaft (not shown) coupled to a suitable drive mechanism (equally not shown) for rotating the auger 6 during the harvesting operation.

As best seen in Figure 3, the free end of the shaft 28 is fixedly secured to a crank arm 32, the distal end of which is attached at 34 to a rod 36 of an electrical actuator 38. It readily will be appreciated that different settings of the crank arm 32, through the shaft 28 and its interior crank arm 23, result in different positions of the finger arm 18 relative to the auger body 10. The disposition of the parts as shown in Figure 3 corresponds to the timing of the retractable fingers 8 during normal operative conditions wherein said fingers 8 are protruding from the auger body 10 when directed to the crop receiving side of the attachment 1 and are retracted within the auger body 10 at the diametrically opposed side thereof. The cylindrical outline generated by the fingers 8 when driven in the direction of arrow F is schematically represented by the dashed line 40. A limit switch 42, adjustably supported on the frame 2, is operable to restrict the retractive stroke of the actuator rod 36 by cutting the current to the actuator motor when the switch 42 becomes engaged by the crank arm 32. In so doing, retractive movement of the actuator 38 beyond a workable position is prevented.

A three-position switch provided in the operator's cab (not shown) allows for a remotely controlled energizing of the actuator 38 in the one or other direction thereby changing the relative position of the finger shaft 18 and as such enabling on-the-go adjustments of the timing of the retractable fingers 8 whenever required by changing crop conditions.

The arrangement as shown in Figure 4 corresponds to the situation in which an unplugging of the harvester is taken place. It will be seen that the drive direction of the feed rolls 44 and the pick-up device 3 is reversed, as well as the drive direction of the auger 6, which is indicated by the arrow R. When comparing Figure 4 with Figure 3, it will be noticed that the rod 36 of the actuator 38 has been extended to a degree for effecting the anchoring point 34 to the crank arm 32 being swung over an arc α, resulting in the finger shaft 18 equally being rotated in a clockwise direction, as seen in Figure 4, over the same arc α. As a consequence, the outline 46 described by the fingers 8 is shifted considerably to the lower rear side of the auger 6 meaning that the fingers 8 now are extended in said area so that they positively can assist in the removal of plugged crop material in the transitional area between the feed rolls 44 and the auger 6. A limit switch 48 again is operable to define the maximum extended position of the actuator rod 36.

It will be clear that although in the depicted arrangement the arc α is approximately 120°, the position of the limit switches 42 and 48 may be varied so as to obtain either a smaller or a larger angle, respectively reducing or increasing the stroke of the actuator 38. By providing a suitable link arrangement between the actuator 38 and the crank arm 32, angles of 180° and even more are obtainable so that the finger shaft 18 can be set in diametrically opposed working positions.

In an alternative arrangement (not shown), the limit switches 42 and 48 are replaced by adjustable potentiometers which are built in into the actuator 38 and which are operable to directly define and restrict the working stroke of the actuator rod 36.

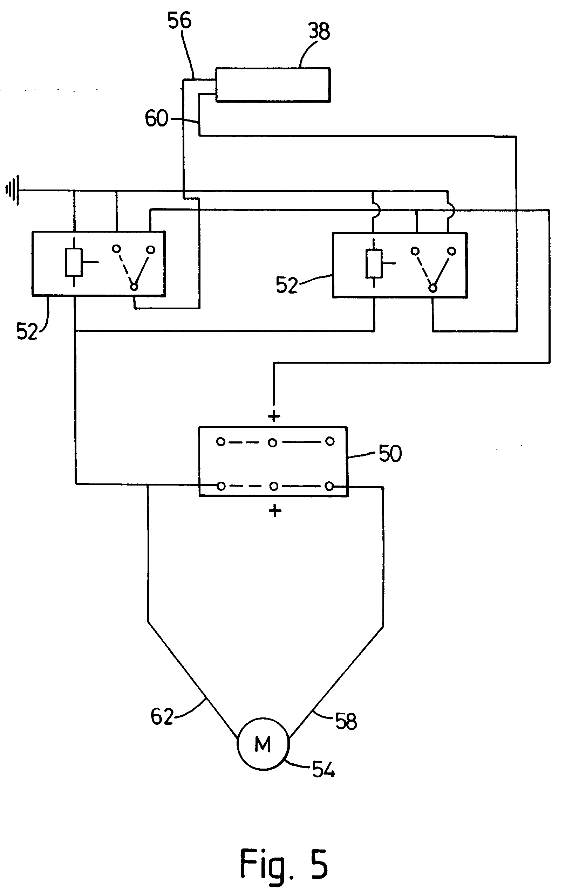

As already mentioned above, the timing of the retractable fingers 8 is remotely controlled by a three-position switch provided in the operators cab, allowing for an infinite adjustment of the arrangement on-the-go. However, for unplugging purposes, an infinite adjustment of the finger timing is not really required as the fingers 8 anyhow have to be shifted to their extreme reversed position. In order to obviate the need for the operator to first bring the fingers 8 in their rearwardly extended position and then thereafter command the drive reversal of the crop intake components, such as the auger 6, for starting an unplugging operation, it is proposed in Figure 5 to provide an additional switch 50 in the operators cab which as well controls the setting of the auger fingers 8 in either one of their extreme positions as the drive reversal of the crop gathering and transporting parts. The electrical diagram of Figure 5 basically comprises and schematically shows the switch 50, two relays 52, the actuator 38 and a drive reversing motor 54. In the full line position of switch 50, which corresponds to the full line position of the relays 52, the actuator is energized through line 56 whereas the drive reversing motor 54 is energized through line 58. In order to reverse, the switch 50 is switched over to its dashed line position, hereby attracting the relays 52, and energizing lines 60 and 62 so as to reverse the operation of as well the actuator 38 as of the motor 54.

It will be clear from the foregoing that the switch 50 simultaneously initiates both the retractable finger timing as the drive reversal. The limit switches 42 and 48 again are employed to switch off the current to the actuator 38 when reaching an end-of-stroke position while, at that instant, the drive motor 54 continues its operation. The relation between the mentioned three-position switch and the switch 50 is such that the former may override the operation of the latter, meaning that even during an unplugging operation, the finger timing still may be adjusted at wish.

In an alternative arrangement, the electrical diagram of Figure 5 may be rearranged such that actuation of the switch 50 allows the fingers 8 to reverse completely before the drive reversal of the motor 54 is initiated. The foregoing ensures that the retractable fingers 8 have reached their optimum working position before the actual drive reversal takes place, resulting in an immediate impact of the fingers 8 on the unplugging operation.

Although the present invention mainly has been described in connection with a pick-up device for a forage harvester, it will be appreciated that the invention should not be limited thereto but can be employed on any kind of crop gathering or harvesting attachment and/or header using a drum-like conveyor with retractable fingers. As an example, combine harvesters conventionally employ a header assembly comprising a.o. a sickle bar for severing the crop from the stubble and a crop consolidating auger provided with retractable fingers for assisting in the transfer of the crop towards a straw elevator and from there onwards to the threshing mechanism of the combine. In this application, the correct timing of the retractable fingers is also essential and the need of reversing the drive of the gathering components for unplugging purposes occasionally is present as well. In other words, the reversing mechanism for the retractable fingers would be welcomed. The same is equally true for pick-up arrangements of agricultural balers also using crop conveying augers with retractable fingers.

## Claims

1. A crop gathering attachment (1) for an agricultural harvester comprising :
- a rotatable drum-like conveyor (6) for transporting crop material,
- a stationary crank shaft mechanism (20) enclosed in the conveyor (6) and having eccentric means (18) disposed eccentrically to and parallel with the rotational axis of the conveyor (6); and
- a finger arrangement (8) comprising a plurality of finger members (8) operatively connected to said eccentric means (18) and projecting outwardly through apertures in the peripheral wall (10) of the conveyor (6) to a different extent; the arrangement being timed such that due to the eccentrical disposition of the eccentric means (18) relative to the rotational axis of the conveyor (6), the finger members (8) are reciprocated relative to said conveyor wall (10) upon rotation of the conveyor (6), thereby protruding from said wall (10) at one side of the conveyor (6) for projecting into the crop material and being retracted relative to said wall (10) at the generally diametrically opposed side of said conveyor (6) for releasing the transported crop; and
characterized in that
actuator means (38) are operatively connected to the crank shaft mechanism (20) for remotely controlling the position of the eccentric means (18) relative to the conveyor (6) enabling on-the-go adjustments of the timing of the finger members (8).

2. An attachment according to claim 1 characterized in that the crank shaft mechanism (20) further comprises :
- a shaft member (28) provided generally coaxially with the rotational axis of the conveyor (6) and connected at one end to the eccentric means (18) by means of a crank arm (23); and
- a lever member (32) fixedly secured at one end to the distal end of said shaft member (28) and rotatably connected at the opposed end thereof to the actuator means (38).

3. An attachment according to claim 2 characterized in that by actuating the actuator means (38), the lever member (32) is moved through a range of positions thereby varying the relative position of the eccentric means (18) with respect to the conveyor (6) for shifting the maximum extended position of the finger members (8) along the periphery of the conveyor (6).

4. An attachment according to any of the preceding claims characterized in that the actuator means (38) is of the electrical type and is remotely controllable through a three-position switch enabling adjustments of the finger members timing in the one or other direction.

5. An attachment according to any of the claims 1 to 3 characterized in that the actuator means (38) comprises a double-acting hydraulic cylinder enabling adjustments of the finger members timing in the one or other direction.

6. An attachment according to any of the preceding claims characterized in that sensor means (42, 48) are operable to limit the operative stroke of the actuator means (38).

7. An attachment according to claim 6 when appended either directly or indirectly to claim 2 characterized in that said sensor means (42, 48) comprise a pair of limit switches (42, 48) operatively associated with the lever member (32) and adjustable relative thereto for selectively limiting the range of allowable positions of said member (32).

8. A crop gathering attachment (1) for an agricultural harvester comprising :
- a rotatable drum-like conveyor (6) operatively connected to a drive mechanism (54) for driving the conveyor (6) either in a first direction to transport crop material towards said harvester or in a second, reverse direction to expel plugged crop material from said harvester,
- a stationary crank shaft mechanism (20) enclosed in the conveyor (6) and having eccentric means (18) disposed in a first position eccentrically to and parallel with the rotational axis of the conveyor (6); and
- a finger arrangement (8) comprising a plurality of finger members (8) operatively connected to said eccentric means (18) and projecting outwardly through apertures in the peripheral wall (10) of the conveyor (6) to a different extent; the arrangement being timed such that due to the eccentrical disposition of the eccentric means (18) relative to the rotational axis of the conveyor (6), the finger members (8) are reciprocated relative to said conveyor wall (10) upon rotation of the conveyor (6), thereby protruding from said wall (10) at one side of the conveyor (6) for projecting into the crop material and being retracted relative to said wall (10) at the generally diametrically opposed side of said conveyor (6) for releasing the transported crop; and
characterized in that
actuator means (38) are operatively connected to the crank shaft mechanism (20) in a manner such that, upon reversing the drive of the drive mechanism (54) from the first direction to the second direction and/or vice versa, the eccentric means (18) is moved to a second position offset relative to the first position, and/or vice versa, to thereby substantially modify the timing of the finger members (8).

9. An attachment according to claim 8 characterized in that the modification of the timing of the finger members (8) is effected simultaneously with the reversal of the drive direction of the conveyor (6).

10. An attachment according to claim 9 characterized in that a single switch (50) is operatively associated with the drive mechanism (54) on the one hand and the actuator means (38) on the other hand for actuating both at the same time.

11. An attachment according to claim 8 characterized in that the drive mechanism (54) and the actuator means (38) are electrically linked in a manner such that, upon initiating an unplugging operation and before reversing the drive direction of the drive mechanism (54), the actuator means (38) first move the eccentric means (18) completely to its second, offset position.

12. An attachment according to any of the claims 8 to 11 characterized in that the conveyor (6) cooperates with crop transporting and/or processing means (44) disposed rearwardly thereof as seen in the direction of normal crop flow through the harvester thereby defining a transitional area inbetween; the arrangement being such that in the maximum extended position of the finger members (8), corresponding to the second, offset position of the eccentric means (18), said finger members (8) extend in said transitional area.

13. An attachment according to any of the claims 8 to 12 characterized in that the crank shaft mechanism (20) further comprises :
- a shaft member (28) provided generally coaxially with the rotational axis of the conveyor (6) and connected at one end to the eccentric means (18) by means of a crank arm (23); and
- a lever member (32) fixedly secured at one end to the distal end of said shaft member (28) and rotatably connected at the opposed end thereof to the actuator means (38).

14. An attachment according to claim 13 characterized in that by actuating the actuator means (38), the lever member (32) is uninterruptedly moved from a first position corresponding to the first position of the eccentric means (18) to a second position corresponding to the second position of the eccentric means (18) or vice versa for shifting the maximum extended position of the finger members (8) along the periphery of the conveyor (6).

15. An attachment according to any of the claims 8 to 14 characterized in that sensor means (42, 48) are operable to limit the operative stroke of the actuator means (38).

16. An attachment according to claim 15 when appended to claim 14 characterized in that said sensor means (42, 48) comprise a pair of limit switches (42, 48) operatively associated with the lever member (32) and adjustable relative thereto for selectively predetermining the first and second position of said lever member (32).

17. A method of unplugging crop material from a crop gathering attachment (1) for an agricultural harvester; said attachment (1) comprising :
- a rotatable drum-like conveyor (6) operatively connected to a drive mechanism (54) for driving the conveyor (6) either in a first direction to transport crop material towards said harvester or in a second, reverse direction to expel plugged crop material from said harvester,
- a stationary crank shaft mechanism (20) enclosed in the conveyor (6) and having eccentric means (18) disposed in a first position eccentrically to and parallel with the rotational axis of the conveyor (6); and
- a finger arrangement (8) comprising a plurality of finger members (8) operatively connected to said eccentric means (18) and projecting outwardly through apertures in the peripheral wall (10) of the conveyor (6) to a different extent; the arrangement being timed such that due to the eccentrical disposition of the eccentric means (18) relative to the rotational axis of the conveyor (6), the finger members (8) are reciprocated relative to said conveyor wall (10) upon rotation of the conveyor (6), thereby protruding from said wall (10) at one side of the conveyor (6) for projecting into the crop material and being retracted relative to said wall (10) at the generally diametrically opposed side of said conveyor (6) for releasing the transported crop; and
said method being characterized in that it comprises the steps of :
- reversing the drive of the drive mechanism (54) from the first direction to the second direction;
- actuating actuator means (38), operatively connected to the crank shaft mechanism (20); and thereby
- moving the eccentric means (18) to a second position offset relative to the first position to thereby substantially modify the timing of the finger members (8).

18. A method according to claim 17 characterized in that the reversing step, the actuating step and the moving step are effected simultaneously.

19. A method according to claim 17 characterized in that the actuating step and the moving step are completed before the reversing step is initiated.

20. A method according to any of the claims 17 to 19 characterized in that it further comprises the step of once-only actuating a single switch (50) for initiating both the reversing step and the actuating step.

21. A method according to any of the claims 17 to 20 characterized in that it further comprises the step of extending the finger members (8) to their maximum possible extent in a transitional area defined between the conveyor (6) and cooperating crop transporting and/or processing means (44) disposed rearwardly of said conveyor (6) as seen in the direction of normal crop flow through the harvester.

## Patentansprüche

1. Erntegut-Aufsammel-Anbaugerät (1) für eine landwirtschaftliche Erntemaschine, mit:
- einem in Drehung versetzbaren trommelartigen Förderer (6) zum Transportieren von Erntegut,
- einem stationären Kurbelwellenmechanismus (20), der in dem Förderer (6) eingeschlossen ist und exzentrische Einrichtungen (18) aufweist, die exzentrisch zu und parallel zu der Drehachse des Förderers (6) angeordnet sind, und
- einer Fingeranordnung (8), die eine Vielzahl von Fingerteilen (8) umfaßt, die betriebsmäßig mit den exzentrischen Einrichtungen (18) verbunden sind und durch Öffnungen in der Umfangswand (10) des Förderers (6) in unterschiedlichem Ausmaß nach außen hin vorspringen, wobei die Anordnung derart Zeitgesteuert ist, daß aufgrund der exzentrischen Anordnung der exzentrischen Einrichtungen (18) gegenüber der Drehachse des Förderers (6) die Fingerteile (8) gegenüber der Förderer-Wand (10) bei einer Drehung des Förderers (6) hin- und herbewegt werden, so daß sie von der Wand (10) an einer Seite des Förderers (6) vorspringen, um in das Erntematerial einzudringen, während sie gegenüber dieser Wand (10) an der allgemein diametral gegenüberliegenden Seite des Förderers (6) zurückgezogen sind, um das transportierte Erntegut freizugeben,
dadurch gekennzeichnet, daß:
- Stellgliedeinrichtungen (38) betriebsmäßig mit dem Kurbelwellenmechanismus (20) verbunden sind, um eine Fernsteuerung der Position der exzentrischen Einrichtungen (18) gegenüber dem Förderer (6) zu ermöglichen, was eine laufende Einstellung der Zeitsteuerung der Fingerteile (8) im Betrieb ermöglicht.

2. Anbaugerät nach Anspruch 1,
dadurch gekennzeichnet, daß der Kurbelwellenmechanismus (20) weiterhin folgende Teile umfaßt:
- einen Wellenteil (28), der allgemein koaxial zur Drehachse des Förderers (6) vorgesehen und an einem Ende über einen Kurbelarm (23) mit den exzentrischen Einrichtungen (18) verbunden ist, und
- ein Hebelelement (32), das starr an einem Ende mit dem außenliegenden Ende des Wellenteils (28) verbunden ist und am gegenüberliegenden Ende drehbar mit der Stellgliedeinrichtung (38) verbunden ist.

3. Anbaugerät nach Anspruch 2,
dadurch gekennzeichnet, daß durch Betätigen der Stellgliedeinrichtung (38) das Hebelelement (32) über einen Bereich von Positionen bewegt wird, wodurch die Relativstellung der exzentrischen Einrichtungen (18) gegenüber dem Förderer (6) geändert wird, um die maximal ausgefahrene Stellung der Fingerteile (8) entlang des Umfanges des Förderers (6) zu verschieben.

4. Anbaugerät nach einem der vorhergehenden Ansprüche,
dadurch gekennzeichnet, daß die Stellgliedeinrichtung (38) vom elektrischen Typ und über einen Dreistellungs-Schalter fernsteuerbar ist, der Einstellungen der Zeitsteuerung der Fingerteile in der einen oder anderen Richtung ermöglicht.

5. Anbaugerät nach einem der Ansprüche 1 - 3,
dadurch gekennzeichnet, daß die Stellgliedeinrichtung (38) einen doppelt wirkenden Hydraulikzylinder umfaßt, der Einstellungen der Zeitsteuerung der Fingerteile in der einen oder anderen Richtung ermöglicht.

6. Anbaugerät nach einem der vorhergehenden Ansprüche,
dadurch gekennzeichent, daß Sensoreinrichtungen (42,48) zur Begrenzung des Arbeitshubes der Stellgliedeinrichtung (38) betreibbar sind.

7. Anbaugerät nach Anspruch 6 unter direkter oder indirekter Rückbeziehung auf Anspruch 2,
dadurch gekennzeichnet, daß die Sensoreinrichtungen (42,48) zwei Grenzschalter (42,48) umfassen, die betriebsmäßig mit dem Hebelelement (32) verbunden und gegenüber diesem einstellbar sind, um selektiv den Bereich der zulässigen Positionen des Hebelelementes (32) zu begrenzen.

8. Erntegut-Aufsammel-Anbaugerät (1) für eine landwirtschaftliche Erntemaschine, mit:
- einem in Drehung versetzbaren trommelartigen Förderer (6), der betriebsmäßig mit einem Antriebsmechanismus (54) zum Antrieb des Förderers (6) entweder in einer ersten Richtung zum Transport von Erntegut in Richtung auf die Erntemaschine oder in einer zweiten umgekehrten Richtung zum Ausstoßen von eine Verstopfung hervorrufendem Erntegut aus der Erntemaschine verbunden ist,
- einem stationären Kurbelwellenmechanismus (20), der in dem Förderer (6) eingeschlossen ist und exzentrische Einrichtungen (18) aufweist, die auf einer ersten Position exzentrisch zu und parallel zu der Drehachse des Förderers 6 angeordnet sind, und
- einer Fingeranordnung (8), die eine Vielzahl von Fingerteilen (8) umfaßt, die betriebsmäßig mit den exzentrischen Einrichtungen (18) verbunden sind und durch Öffnungen in der Umfangswand (10) des Förderers (6) in unterschiedlichem Ausmaß nach außen vorspringen, wobei die Anordnung derart zeitgesteuert ist, daß aufgrund der exzentrischen Anordnung der exzentrischen Einrichtungen (18) gegenüber der Drehachse des Förderers (6) die Fingerteile (8) gegenüber der Fördererwand (10) bei einer Drehung des Förderers hin- und herbewegt werden, so daß sie aus der Wand (10) an einer Seite des Förderers (6) vorspringen, um in das Erntegut einzudringen, während sie gegenüber dieser Wand (10) an der allgemein diametral gegenüberliegenden Seite des Förderers (6) zurückgezogen sind, um transportiertes Erntegut freizugeben, dadurch gekennzeichnet, daß
Stellgliedeinrichtungen (38) betriebsmäßig mit dem Kurbelwellenmechanismus (20) in einer derartigen Weise verbunden sind, daß bei einer Umkehrung des Antriebs des Antriebsmechanismus (54) von der ersten Richtung auf die zweite Richtung und/oder umgekehrt, die exzentrischen Einrichtungen (18) auf eine gegenüber der ersten Stellung versetzte zweite Stellung und/oder umgekehrt bewegt werden, um auf diese Weise in erheblichem Ausmaß die Zeitsteuerung der Fingerteile (8) zu modifizieren.

9. Anbaugerät nach Anspruch 8,
dadurch gekennzeichnet, daß die Modifikation der Zeitsteuerung der Fingerteile (8) gleichzeitig mit der Umkehrung der Antriebsrichtung des Förderers (6) bewirkt wird.

10. Anbaugerät nach Anspruch 9,
dadurch gekennzeichnet, daß ein einziger Schalter (50) betriebsmäßig mit dem Antriebsmechanismus (54) einerseits und der Stellgliedeinrichtung (38) andererseits verbunden ist, um beide gleichzeitig zu betätigen.

11. Anbaugerät nach Anspruch 8,
dadurch gekennzeichnet, daß der Antriebsmechanismus (54) und die Stellgliedeinrichtung (38) elektrisch in einer derartigen Weise miteinander verbunden sind, daß bei der Einleitung eines Vorganges zur Beseitigung einer Verstopfung und vor der Umkehrung der Antriebsrichtung des Antriebsmechanismus (54) die Stellgliedeinrichtung (38) zunächst die exzentrischen Einrichtungen (18) vollständig auf ihre zweite versetzte Stellung bewegt.

12. Anbaugerät nach einem der Ansprüche 8 - 11,
dadurch gekennzeichnet, daß der Förderer (6) mit Erntegut-Transport- und/oder Verarbeitungseinrichtungen (44) zusammenwirkt, die hinter dem Förderer bei Betrachtung in der Richtung der normalen Erntegutströmung durch die Erntemaschine angeordnet sind, wodurch ein Übergangsbereich zwischen diesen Teilen gebildet wird, wobei die Anordnung derart ist, daß in der maximal ausgefahrenen Stellung der Fingerteile (8), die der zweiten versetzten Stellung der exzentrischen Einrichtungen (18) entspricht, die Fingerteile (8) sich in den Übergangsbereich erstrecken.

13. Anbaugerät nach einem der Ansprüche 8 - 12,
dadurch gekennzeichnet, daß der Kurbelwellenmechanismus (20) weiterhin:
- einen Wellenteil (28), der allgemein koaxial zur Drehachse des Förderers (6) angeordnet und an einem Ende mit den exzentrischen Einrichtungen (18) über einen Kurbelarm (23) verbunden ist, und
- ein Hebelelement (32) umfaßt, das an einem Ende fest an dem außenliegenden Ende des Wellenteils (28) befestigt und an seinem gegenüberliegenden Ende drehbar mit der Stellgliedeinrichtung (38) verbunden ist.

14. Anbaugerät nach Anspruch 13,
dadurch gekennzeichnet, daß bei einer Betätigung der Stellgliedeinrichtung (38) das Hebelelement (32) ununterbrochen von einer ersten Stellung, die der ersten Stellung der exzentrischen Einrichtungen (18) entspricht, auf eine zweite Stellung bewegt wird, die der zweiten Stellung der exzentrischen Einrichtungen (18) entspricht, oder umgekehrt, um die maximal ausgefahrene Stellung der Fingerteile (8) entlang des Umfanges des Förderers (6) zu verschieben.

15. Anbaugerät nach einem der Ansprüche 8 - 14,
dadurch gekennzeichnet, daß Sensoreinrichtungen (42,48) zur Begrenzung des Arbeitshubes der Stellgliedeinrichtung (38) betreibbar sind.

16. Anbaugerät nach Anspruch 15 unter Rückbeziehung auf Anspruch 14,
dadurch gekennzeichnet, daß die Sensoreinrichtungen (42,48) zwei Grenzschalter (42,48) umfassen, die betriebsmäßig dem Hebelelement (32) zugeordnet und relativ zu diesem einstellbar sind, um selektiv die erste und zweite Stellung des Hebelelementes (32) zu bestimmen.

17. Verfahren zur Beseitigung einer Verstopfung von Erntegut in einem Erntegut-Aufsammel-Anbaugerät (1) für eine landwirtschaftliche Erntemaschine, wobei das Anbaugerät (1) folgende Teile umfaßt:
- einen in Drehung versetzbaren trommelartigen Förderer (6), der betriebsmäßig mit einem Antriebsmechanismus (54) verbunden ist, um den Förderer (6) entweder in einer ersten Richtung zum Transport von Erntematerial in Richtung auf die Erntemaschine oder in einer zweiten Rückwärtsrichtung zum Ausstoßen von die Verstopfung hervorrufendem Erntegut aus der Erntemaschine verbunden ist,
- einen stationären Kurbelwellenmechanismus (20), der in dem Förderer (6) eingeschlossen ist und exzentrische Einrichtungen (18) aufweist, die in einer ersten Position exzentrisch zu und parallel zu der Drehachse des Förderers (6) angeordnet sind, und
- eine Fingeranordnung (8), die eine Vielzahl von Fingerteilen (8) umfaßt, die betriebsmäßig mit den exzentrischen Einrichtungen (18) verbunden sind und durch Öffnungen in der Umfangswand (10) des Förderers (6) in unterschiedlichem Ausmaß nach außen vorspringen, wobei die Zeitsteuerung derart ist, daß aufgrund der exzentrischen Anordnung der exzentrischen Einrichtungen (18) bezüglich der Drehachse des Förderers (6) die Fingerteile (8) gegenüber der Fördererwand (10) bei einer Drehung des Förderers (6) hin- und herbewegt werden, so daß sie von der Wand (10) auf einer Seite des Förderers (6) vorspringen, um in das Erntegut einzudringen, während sie gegenüber der Wand (10) an der allgemein diametral gegenüberliegenden Seite des Förderers (6) zurückgezogen sind, um das transportierte Erntegut freizugeben,
wobei das Verfahren dadurch gekennzeichnet ist, daß es die folgenden Schritte umfaßt:
- Umkehren des Antriebs des Antriebsmechanismus (54) von der ersten Richtung auf die zweite Richtung,
- Betätigen von Stellgliedeinrichtungen (38), die betriebsmäßig mit dem Kurbelwellenmechanismus (20) verbunden sind, und damit
- Bewegen der exzentrischen Einrichtungen (18) auf eine zweite Stellung, die gegenüber der ersten Stellung versetzt ist, um auf diese Weise in erheblichem Ausmaß die Zeitsteuerung der Fingerteile (8) zu modifizieren.

18. Verfahren nach Anspruch 17,
dadurch gekennzeichnet, daß der Umkehrschritt, der Betätigungsschritt und der Bewegungsschritt gleichzeitig ausgeführt werden.

19. Verfahren nach Anspruch 17,
dadurch gekennzeichnet, daß der Betätigungsschritt und der Bewegungsschritt abgeschlossen werden, bevor der Umkehrschritt eingeleitet wird.

20. Verfahren nach einem der Ansprüche 17 - 19,
dadurch gekennzeichnet, daß es weiterhin den Schritt der lediglich einmaligen Betätigung eines einzigen Schalters (50) zur Einleitung sowohl des Umkehrschrittes als auch des Betätigungsschrittes umfaßt.

21. Verfahren nach einem der Ansprüche 17 - 20,
dadurch gekennzeichnet, daß es weiterhin den Schritt des Ausfahrens der Fingerteile (8) auf ihr maximal mögliches Ausmaß in einem Übergangsbereich umfaßt, der zwischen dem Förderer (6) und damit zusammenwirkenden Erntegut-Transport- und/oder Verarbeitungseinrichtungen (44) gebildet ist, die rückwärts von dem Förderer (6) bei Betrachtung in Richtung der normalen Erntegutströmung durch den Förderer angeordnet sind.

## Revendications

1. Accessoire collecteur de récolte (1) pour une moissonneuse agricole comprenant:
- un transporteur à rotation de type tambour (6) pour transporter le matériau de récolte,
- un mécanisme stationnaire à vilebrequin (20) compris dans le transporteur (6) et présentant des moyens excentriques (18) disposés de manière excentrique et parallèles à l'axe de rotation du transporteur (6); et
- un dispositif de doigts (8) comprenant une pluralité d'éléments de doigts (8) associés fonctionnellement auxdits moyens excentriques (18) et se prolongeant vers l'extérieur au travers d'ouvertures dans la paroi périphérique (10) du transporteur (6) jusqu'à une étendue différente; le dispositif étant commandé chronologiquement de manière à ce que, étant donné la position excentrique des moyens excentriques (18) par rapport à l'axe de rotation du transporteur (6), les éléments de doigts (8) aillent et viennent par rapport à ladite paroi du transporteur (10) lors de la rotation du transporteur (6), ce qui les fait sortir de ladite paroi (10) d'un côté du transporteur (6) pour s'avancer dans le matériau de récolte et qui les rétracte par rapport à ladite paroi (10) du côté généralement diamétralement opposé dudit transporteur (6) pour relâcher la récolte transportée, et
caractérisé en ce que
des moyens d'actionneur (38) sont associés fonctionnellement au mécanisme à vilebrequin (20) pour contrôler à distance la position des moyens excentriques (18) par rapport au transporteur (6), permettant des réglages de la chronologie des éléments de doigts (8) en cours d'opération.

2. Accessoire selon la revendication 1, caractérisé en ce que le mécanisme à vilebrequin (20) comprend en outre:
- un élément d'arbre (28) réalisé généralement coaxialement à l'axe de rotation du transporteur (6) et raccordé par une extrémité aux moyens excentriques (18) au moyen d'un bras de vilebrequin (23); et
- un élément de levier (32) raccordé fixement par une extrémité à l'extrémité distale dudit élément d'arbre (28) et raccordé à rotation par l'extrémité opposé aux moyens d'actionneur (38).

3. Accessoire selon la revendication 2, caractérisé en ce que, en mettant en marche les moyens d'actionnement (38), l'élément de levier (32) est déplacé sur une série de positions, variant ainsi la position relative des moyens excentriques (18) par rapport au transporteur (6) pour déplacer la position de prolongement maximum des éléments de doigts (8) le long de la périphérie du transporteur (6).

4. Accessoire selon l'une quelconque des revendications précédentes, caractérisé en ce que les moyens d'actionneur (38) sont du type électrique et sont contrôlables à distance via un commutateur à trois positions permettant des réglages chronologiques des éléments de doigts dans l'une ou l'autre direction.

5. Accessoire selon l'une quelconque des revendications 1 à 3, caractérisé en ce que les moyens d'actionneur (38) comprennent un cylindre hydraulique à double action permettant des réglages chronologiques des éléments de doigts dans l'une ou l'autre direction.

6. Accessoire selon l'une quelconque des revendications précédentes, caractérisé en ce que les moyens de détecteur (42, 48) sont utilisables pour limiter la course opérationnelle des moyens d'actionneur (38).

7. Accessoire selon la revendication 6, lorsque reliée directement ou indirectement à la revendication 2, caractérisé en ce que lesdits moyens de détecteur (42, 48) comprennent une paire de contacteurs de fin de course (42, 48) associés fonctionnellement avec l'élément de levier (32) et réglables par rapport à celui-ci pour limiter sélectivement la plage des positions possibles dudit élément (32).

8. Accessoire collecteur de récolte (1) pour une moissonneuse agricole, comprenant:
- un transporteur à rotation de type tambour (6) associé fonctionnellement à un mécanisme d'entraînement (54) pour entraîner le transporteur (6) soit dans une première direction afin de transporter du matériau de récolte vers ladite moissonneuse ou, dans une deuxième direction inversée, pour expulser de ladite moissonneuse du matériau de récolte formant bouchon.
- un mécanisme stationnaire à vilebrequin (20) compris dans le transporteur (6) et ayant des moyens excentriques (18) disposés dans une première position excentrique et parallèle par rapport à l'axe de rotation du transporteur (6); et
- un dispositif de doigts (8) comprenant une pluralité d'éléments de doigts (8) associés fonctionnellement auxdits moyens excentriques (18) et se prolongeant vers l'extérieur à travers des ouvertures dans la paroi périphérique (10) du transporteur (6) sur une étendue différente; le dispositif étant commandé chronologiquement de manière à ce que, étant donné la disposition excentrique des moyens excentriques (18) par rapport à l'axe de rotation du transporteur (6), les éléments de doigts (8) soient actionnés en va et vient par rapport à ladite paroi de transporteur (10) lors de la rotation du transporteur (6), si bien qu'ils ressortent de ladite paroi (10) d'un côté du transporteur (6) pour avancer dans le matériau de récolte et qu'ils se rétractent par rapport à ladite paroi (10) du côté généralement diamétralement opposé dudit transporteur (6) pour relâcher la récolte transportée; et
caractérisé en ce que
les moyens d'actionneur (38) sont associés fonctionnellement au mécanisme à vilebrequin (20) en manière telle que, lorsque la commande du mécanisme d'entraînement (54) est inversée de la première direction vers la seconde direction et/ou vice-versa, les moyens excentriques (18) sont déplacés vers une seconde position décalée par rapport à la première position, et/ou vice-versa, pour ainsi modifier substantiellement la commande chronologique des éléments de doigts (8).

9. Accessoire selon la revendication 8, caractérisé en ce que la modification du réglage chronologique des éléments de doigts (8) est effectuée simultanément avec l'inversion de la direction d'entraînement du transporteur (6).

10. Accessoire selon la revendication 9, caractérisé en ce qu'un commutateur (50) unique est associé fonctionnellement avec le mécanisme d'entraînement (54) d'une part et avec l'actionneur (38) d'autre part pour que les deux soient activés en même temps.

11. Accessoire selon la revendication 8, caractérisé en ce que le mécanisme d'entraînement (54) et les moyens d'actionneur (38) sont reliés électriquement en manière telle que, lors de l'opération de lancement d'un débouchage et avant inversion de la direction d'entraînement du mécanisme d'entraînement (54), les moyens d'actionneur (38) déplacent d'abord entièrement les moyens excentriques (18) vers leur deuxième position décalée.

12. Accessoire selon l'une quelconque des revendications 8 à 11, caractérisé en ce que le transporteur (6) coopère avec les moyens de transport et/ou de traitement (44) disposés à l'arrière de celui-ci lorsque vu dans la direction de flux normal de la récolte au travers de la moissonneuse, définissant ainsi une zone transitoire entre ceux-ci; le dispositif étant tel que, dans la position de prolongement maximal des éléments de doigts (8), correspondant à la deuxième position décalée des moyens excentriques (18), lesdits éléments de doigts (8) se prolongent dans ladite zone transitoire.

13. Accessoire selon l'une quelconque des revendications 8 à 12, caractérisé en ce que le mécanisme d'arbre de vilebrequin (20) comprend en outre:
- un élément d'arbre (28) réalisé généralement coaxialement à l'axe de rotation du transporteur (6) et relié par une extrémité aux moyens excentriques (18) à l'aide d'un bras de vilebrequin (23); et
- un élément de levier (32) attaché fixement par une extrémité à l'extrémité distale dudit élément d'arbre (28) et relié à rotation par l'extrémité opposée de celui-ci aux moyens d'actionneur (38).

14. Accessoire selon la revendication 13, caractérisé en ce que, lorsque les moyens d'actionneur (38) sont activés, l'élément de levier (32) est déplacé de manière ininterrompue d'une première position correspondant à la première position des moyens excentriques (18) vers une deuxième position correspondant à la deuxième position des moyens excentriques (18), ou vice versa, pour déplacer la position de prolongement maximal des éléments de doigts (8) le long de la périphérie du transporteur (6).

15. Accessoire selon l'une quelconque des revendications 8 à 14, caractérisé en ce que les moyens de détecteur (42, 48) sont utilisables pour limiter la course opérationnelle des moyens d'actionneur (38).

16. Accessoire selon la revendication 15, lorsque reliée à la revendication 14, caractérisé en ce que lesdits moyens de détecteur (42, 48) comprennent une paire de contacteurs de fin de course (42, 48) associés fonctionnellement avec l'élément de levier (32) et réglables par rapport à celui-ci pour déterminer préalablement et sélectivement la première et la deuxième position dudit élément de levier (32).

17. Méthode pour déboucher du matériau de récolte dans un accessoire collecteur (1) pour une moissonneuse agricole; ledit accessoire (1) comprenant:
- un transporteur à rotation de type tambour (6) associé fonctionnellement à un mécanisme d'entraînement (54) pour entraîner le transporteur (6) soit dans une première direction afin de transporter du matériau de récolte vers ladite moissonneuse ou, dans une deuxième direction inversée, pour expulser de ladite moissonneuse du matériau de récolte formant bouchon.
- un mécanisme stationnaire à vilebrequin (20) compris dans le transporteur (6) et ayant des moyens excentriques (18) disposés dans une première position excentrique et parallèle par rapport à l'axe de rotation du transporteur (6); et
- un dispositif de doigts (8) comprenant une pluralité d'éléments de doigts (8) associés fonctionnellement auxdits moyens excentriques (18) et se prolongeant vers l'extérieur à travers des ouvertures dans la paroi périphérique (10) du transporteur (6) sur une étendue différente; le dispositif étant commandé chronologiquement de manière à ce que, étant donné la disposition excentrique des moyens excentriques (18) par rapport à l'axe de rotation du transporteur (6), les éléments de doigts (8) soient actionnés en va et vient par rapport à ladite paroi de transporteur (10) lors de la rotation du transporteur (6), si bien qu'ils ressortent de ladite paroi (10) d'un côté du transporteur (6) pour avancer dans le matériau de récolte et qu'ils se rétractent par rapport à ladite paroi (10) du côté généralement diamétralement opposé dudit transporteur (6) pour relâcher la récolte transportée; et
ladite méthode étant caractérisée en ce qu'elle comprend les étapes:
- d'inversion de l'entraînement du mécanisme d'entraînement (54) d'une première direction vers une deuxième direction;
- d'activation des moyens d'actionneur (38) reliés fonctionnellement au mécanisme à vilebrequin (20); et ainsi
- de déplacement des moyens excentriques (18) vers une deuxième position, décalée par rapport à la première position, pour modifier ainsi substantiellement le réglage chronologique des éléments de doigts (8).

18. Méthode selon la revendication 17, caractérisée en ce que l'étape d'inversion, l'étape d'activation et l'étape de déplacement sont effectuées simultanément.

19. Méthode selon la revendication 17, caractérisée en ce que l'étape d'activation et l'étape de déplacement sont terminées avant que l'étape d'inversion soit initiée.

20. Méthode selon l'une quelconque des revendications 17 à 19, caractérisée en ce qu'elle comprend en outre l'étape d'une seule activation d'un commutateur (50) unique pour initier l'étape d'inversion ainsi que l'étape d'activation.

21. Méthode selon l'une quelconque des revendications 17 à 20, caractérisée en ce qu'elle comprend en outre les étapes d'extension des éléments de doigts (8) à leur extension maximale possible dans une zone transitoire définie entre le transporteur (6) et des moyens de transport et/ou de traitement (44) associés disposés à l'arrière dudit transporteur (6) comme vus dans la direction de flux normal de la récolte à travers la moissonneuse.
